# EUROPÄISCHE PATENTSCHRIFT

(11) **EP 1 645 836 B1**
(45) Veröffentlichungstag und Bekanntmachung des Hinweises auf die Patenterteilung: **29.08.2007**
(21) Anmeldenummer: 05021300.8
(22) Anmeldetag: 29.09.2005
(51) Int. Cl.: G01B 5/04, G01B 3/12, G01P 3/50

(54) **Einrichtung zur Messung von Weg oder Geschwindigkeit eines bewegten Objektes**
Device for measuring length or velocity of a moving object
Dispositif pour mesurer longeur ou vitesse d'un objet en mouvement

(30) Priorität: 06.10.2004 DE 202004015570 U
(43) Veröffentlichungstag der Anmeldung: 12.04.2006
(73) Patentinhaber: SICK STEGMANN GmbH, 78166 Donaueschingen (DE)
(72) Erfinder: Siraky, Josef, 78166 Donaueschingen (DE); Wölfle, Bernhard, 78073 Bad Dürrheim (DE)
(74) Vertreter: Mussgnug, Bernd

(56) Entgegenhaltungen:
- DD-A3- 271 248
- GB-A- 2 342 719
- US-A- 3 539 782
- US-A- 4 577 411
- US-A- 4 700 484

## Beschreibung

Die Erfindung betrifft eine Messeinrichtung gemäß dem Oberbegriff des Anspruchs 1.

Solche Messeinrichtungen, wie sie z.B. aus US 4 577 411 und US 4 700 484 bekannt sind, bestehen im Wesentlichen aus einem Messrad mit einer als zylindrische Mantelfläche ausgebildeten Lauffläche und einem Drehgeber, wobei die Geberwelle des Drehgebers drehwinkelgenau mit dem Messrad gekoppelt ist. Solche Messeinrichtungen werden zur Weg- und Geschwindigkeitsmessung von bewegten Objekten in Bezug auf ein vorzugsweise ortsfestes Bauteil, z. B. zur Messung des Weges und der Geschwindigkeit von Transportbändern eingesetzt. Das Messrad sitzt mit seiner Lauffläche auf dem zu messenden Objekt reibschlüssig auf, wobei die Drehachse des Messrades (X-Richtung) quer zur Bewegungsrichtung des Objektes (Z-Richtung), z.B. zur Laufrichtung des Transportbandes ausgerichtet ist. Durch die Bewegung des Objektes wird das Messrad und von diesem der Drehgeber angetrieben. Der Drehgeber und das Messrad sind an dem Bauteil, z. B. am einem Maschinengestell, gelagert. Um eine möglichst schlupffreie Messung zu erreichen, sind der Drehgeber und das Messrad senkrecht zur Oberfläche des Objektes (Y-Richtung), d.h. im Wesentlichen senkrecht zur Bewegungsrichtung des Objektes (Z-Richtung) und senkrecht zur Achse des Messrades (X-Richtung) federnd an dem Bauteil gelagert. Durch die federnde Lagerung wird das Messrad gegen die sich bewegende Oberfläche des zu messenden Objektes gedrückt, um einen für eine möglichst schlupffreie Messung erforderlichen Reibschluss zu erzeugen. Eine Bewegung des Objektes quer zur zu messenden Bewegung kann durch eine abgefederte Bewegung des Messrades in der X-Z-Ebene aufgenommen werden.

Bei den bekannten Messeinrichtungen ist die federnde Lagerung mit einer größeren Zahl von Bauteilen realisiert, wodurch ein erheblicher Konstruktions- und Montageaufwand verursacht wird. Justagetoleranzen beim Einbau des Messrades und/oder Unebenheiten der Oberfläche des zu messenden Objektes können dazu führen, dass das Messrad nicht über die gesamte Breite seiner Lauffläche, sondern nur mit einer Kante der Lauffläche auf dem zu messenden Objekt aufliegt. Ein solcher Kantenlauf des Messrades kann den Reibschluss zwischen Messrad und Objekt reduzieren und zu einem erhöhten Verschleiß des Messrades führen.

Der Erfindung liegt die Aufgabe zugrunde, eine verbesserte Messeinrichtung mit einfachem Aufbau zu schaffen.

Diese Aufgabe wird erfindungsgemäß durch eine Messeinrichtung mit den Merkmalen des Anspruchs 1 gelöst.

Vorteilhafte Ausgestaltungen der Erfindung sind in den abhängigen Ansprüchen 2-6 angegeben.

Erfindungsgemäß ist der Drehgeber mit dem Messrad an einem Federarm angebracht, der zwei Schenkel aufweist, wobei einer der Schenkel eine federnde Auslenkung in der Y-Richtung und der andere Schenkel eine federnde Auslenkung in der X-Richtung ermöglicht. Das Messrad kann dadurch nicht nur Oberflächenunebenheiten des zu messenden Objektes in der Y-Richtung folgen. Der Federarm ermöglicht außerdem auch Pendelbewegungen der Drehachse des Messrades in der X-Y-Ebene, d. h. in der Ebene die senkrecht zu dem Oberflächenbereich des zu messenden Objektes steht, auf welchem das Messrad aufsitzt. Die Federung in der Y-Richtung bewirkt einen konstanten Anpressdruck des Messrades an das zu messende Objekt. Die Pendelbewegung gewährleistet, dass sich das Messrad stets mit der gesamten Breite seiner Lauffläche an die Oberfläche des zu messenden Objektes anlegt und über die gesamte Breite seiner Lauffläche mit gleichem Druck gegen die Oberfläche des Objektes angedrückt gehalten wird. Ein Kantenlauf des Messrades wird dadurch vermieden, so dass schlupfbedingte Messfehler und ein erhöhter Verschleiß verhindert werden.

Der Federarm ist einstückig ausgebildet, wobei die Schenkel als aneinander angesetzte Federblätter ausgebildet sind. Das Federblatt des einen Schenkels liegt im Wesentlichen in der X-Z-Ebene und ist in Y-Richtung auslenkbar. Das den anderen Schenkel bildende Federblatt ist gegen das erste Federblatt abgewinkelt in der Y-Z-Ebene ausgebildet und im Wesentlichen in der X-Richtung auslenkbar.

Der Federarm wird mit dem einen Ende seines einen Schenkels an dem Bauteil befestigt. Der zweite Schenkel ist an dem freien Ende des ersten Schenkels angesetzt und gegen diesen rechtwinklig abgebogen. An dem freien Ende des zweiten Schenkels sind der Drehgeber und das Messrad angeordnet.

Für eine einfache und kostengünstige Herstellung ist es von Vorteil, wenn der Federarm als Stanz-Biegeteil aus einem Federblech, vorzugsweise aus einem Federstahlblech hergestellt wird.

Da sich das Messrad aufgrund der pendelnden Lagerung zuverlässig über die gesamte Breite seiner Lauffläche an der Oberfläche des zu messenden Objektes anlegt, kann die Lauffläche des Messrades mit einer großen Breite ausgebildet sein. Eine größere Breite der Lauffläche, d. h. eine größere axiale Breite des Messrades begünstigt dabei sogar das gleichmäßige Andrücken der Lauffläche des Messrades über dessen gesamte Breite. Wird das Laufrad mit einer größeren axialen Breite ausgebildet, so ergibt sich die vorteilhafte Möglichkeit, das Laufrad als Hohlwalze auszubilden und den Drehgeber im Inneren dieser Hohlwalze anzuordnen. Dadurch werden die vorteilhaften Eigenschaften eines Aufsitzens der Lauffläche des Messrades über eine große Breite und damit eines guten Reibschlusses zwischen dem Messrad und dem zu messenden Objekt vereinigt mit einem äußerst kompakten Aufbau der Messeinrichtung.

Die Ausbildung des Federarmes mit zwei als Federblätter ausgebildeten Schenkeln hat insbesondere auch den Vorteil, dass die Federeigenschaften des Federarmes optimiert werden können. Über die Dimensionierung des in Y-Richtung auslenkbaren Schenkels, insbesondere der Breite, Länge und Materialstärke dieses Schenkels kann der Andruck des Messrades an das zu messende Objekt vorgegeben und definiert werden. Die Federeigenschaften des in X-Richtung auslenkbaren Schenkels definieren die Pendeleigenschaften der Achse des Messrades. Die Federblätter der Schenkel weisen dabei in der Ebene ihres Federblattes jeweils eine äußerst hohe Steifigkeit auf. Dies bedeutet, dass der Federarm insgesamt unabhängig von der Auslenkbarkeit in Y-Richtung und X-Richtung eine äußerst hohe Steifigkeit gegen Auslenkungen in der Z-Richtung aufweist. Das Messrad wird dadurch in der Z-Richtung, d. h. in der Bewegungsrichtung des zu messenden Objektes sehr stabil festgehalten, so dass durch die federnde Lagerung die Messgenauigkeit in der Z-Richtung nicht beeinträchtigt wird.

Im Folgenden wird die Erfindung anhand eines in der Zeichnung dargestellten Ausführungsbeispiels näher erläutert. Es zeigen:
- Figur 1: die Messeinrichtung in perspektivischer Ansicht,
- Figur 2: die Messeinrichtung in teilweise geschnittener Ansicht,
- Figur 3: eine Seitenansicht der Messeinrichtung in X-Richtung,
- Figur 4: eine Seitenansicht der Messeinrichtung in Z-Richtung und
- Figur 5: eine Draufsicht auf die Messeinrichtung in Y-Richtung.

Die Messeinrichtung weist einen Drehgeber 10 auf, der in an sich bekannter Weise aufgebaut ist. Der Drehgeber 10 kann ein optischer, magnetischer oder induktiver Drehgeber sein und kann als Absolut- oder Inkremental-Geber ausgebildet sein. Der Drehgeber 10 weist ein Gehäuse 12 auf, in welchem mittels eines Kugellagers 14 koaxial drehbar eine Geberwelle 16 gelagert ist. Die Geberwelle 16 treibt eine Maßverkörperung an, die mittels einer gehäusefesten Abtastung abgetastet wird. Das Gehäuse 12 ist auf der der Eintrittsseite der Geberwelle 16 entgegengesetzten Stirnseite durch einen Deckel 18 abgeschlossen.

Ein Messrad 20, welches z. B. aus Kunststoff hergestellt sein kann, vorzugsweise jedoch aus Metall, insbesondere aus Aluminium hergestellt ist, hat die Form einer Hohlwalze. Dementsprechend besteht das Messrad 20 aus einem kreiszylindrischen Mantel, der als Lauffläche 22 dient. An einer axialen Stirnfläche ist die Hohlwalze des Messrades 20 durch einen Boden 24 abgeschlossen. Der Drehgeber 10 ist koaxial in das Messrad 20 eingesetzt und wird von diesem koaxial umschlossen. Der Boden 24 des Messrades 20 sitzt konzentrisch und drehfest auf der Geberwelle 16. Das Messrad 20 ist koaxial frei um den Drehgeber 10 drehbar, wobei der Drehgeber die Winkelstellung des auf der Geberwelle 16 sitzenden Messrades 20 in Bezug auf das Gehäuse 12 misst. Der Drehgeber 10 ist über ein Kabel 26 angeschlossen, welches zur Stromversorgung des Drehgebers 10 und zum Datenaustausch des Drehgebers 10 mit einer externen Datenverarbeitung dient.

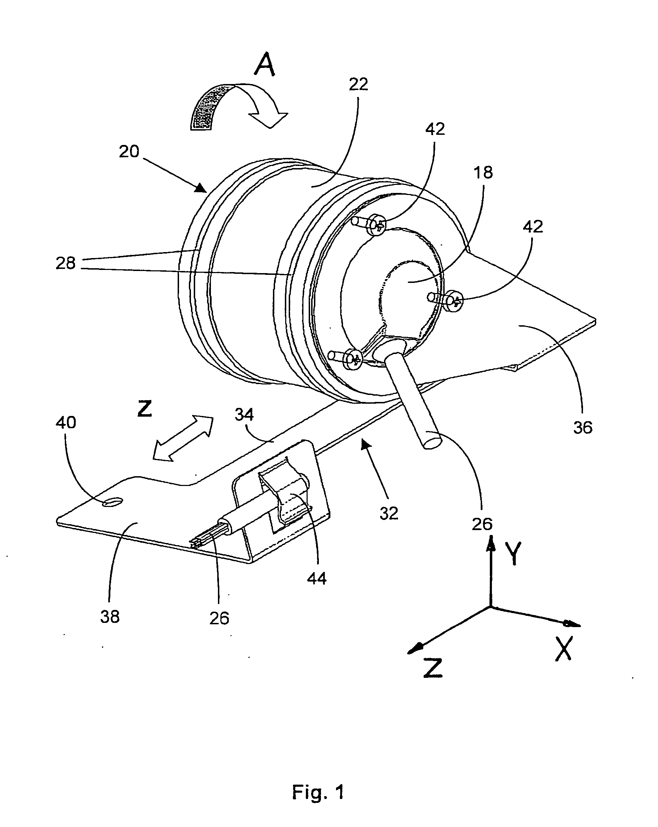

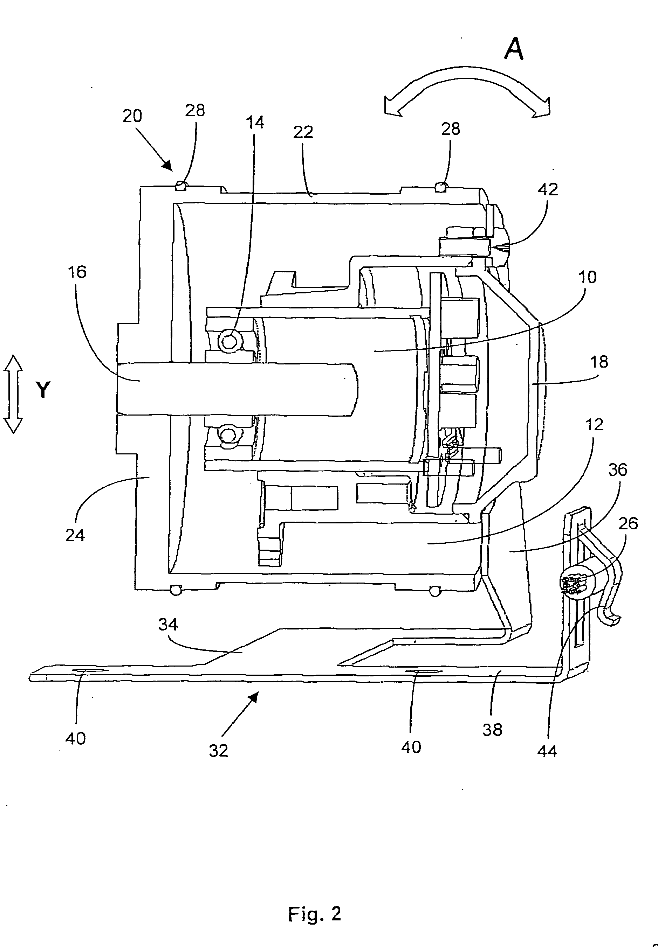

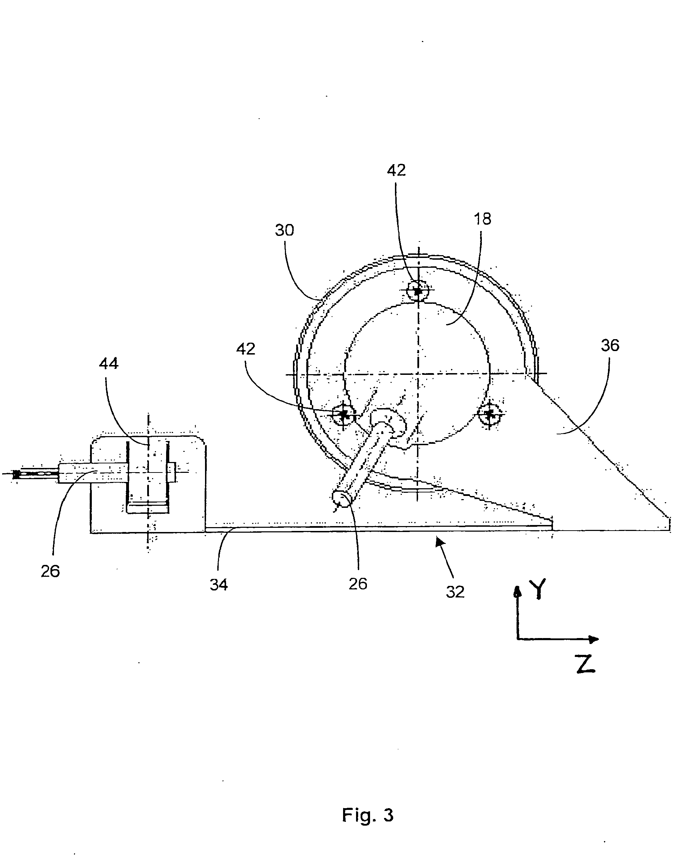

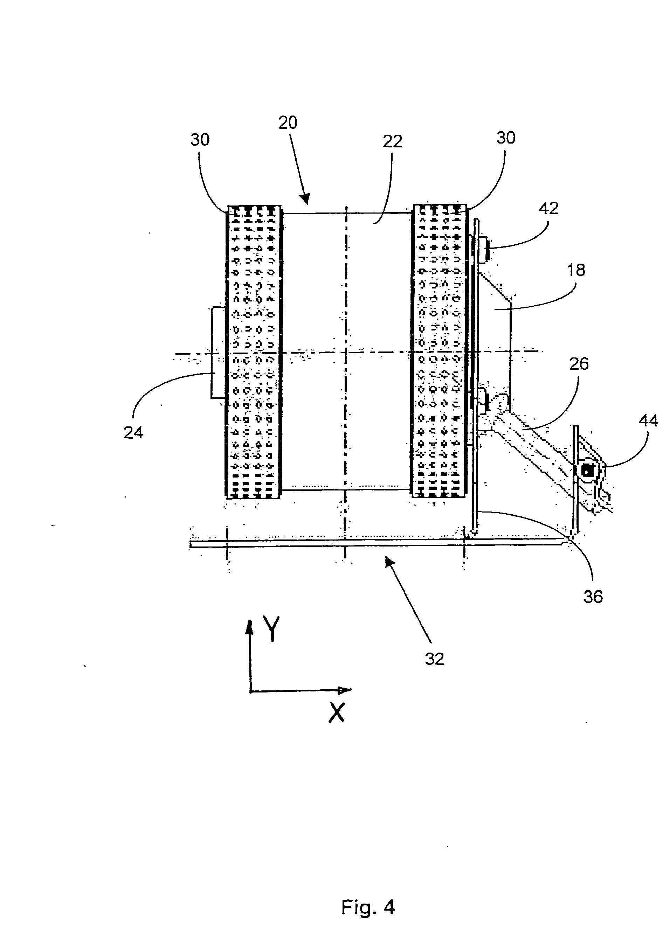

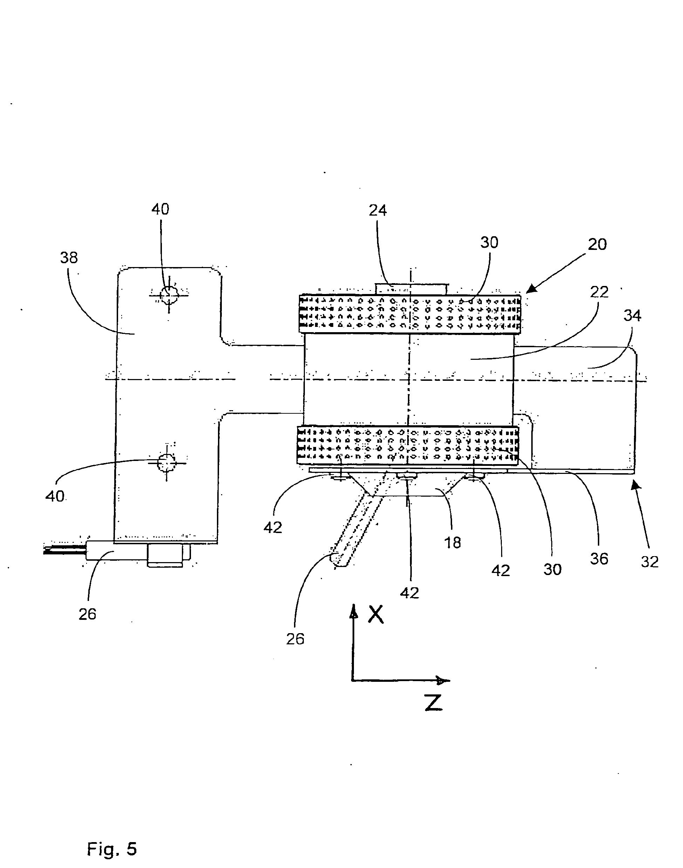

Die Messeinrichtung wird mit der Lauffläche 22 des Messrades 20 auf die sich bewegende Oberfläche des zu messenden Objektes aufgesetzt. Das Messrad 20 wird durch das sich bewegende Objekt drehend mitgenommen. Um einen guten Reibschluss zwischen der Lauffläche 22 und der Oberfläche des zu messenden Objektes zu bewirken, sind an den beiden axialen Enden der Lauffläche 22 jeweils Laufringe außen auf der Mantelfläche der Lauffläche 22 vorgesehen. In dem Ausführungsbeispiel der Figuren 1 und 2 sind diese Laufringe als Gummiringe 28 ausgebildet, die auf den Außenumfang der Lauffläche 22 aufgezogen sind. In dem Ausführungsbeispiel der Figuren 3 bis 5 sind die Laufringe als erhöhte Rändelung 30 auf dem Umfang der Lauffläche 22 ausgebildet. Die Laufringe 28 bzw. 30 bewirken ein Aufsitzen des Messrades 20 an seinen beiden axialen Randbereichen, so dass die gesamte Breite der Lauffläche 22 zuverlässig ausgenutzt wird.

Die Messeinrichtung wird an einem nicht dargestellten Bauteil befestigt, welches als Bezugssystem für die Bewegung des zu messenden Objektes dient. Dieses Bauteil ist vorzugsweise ein ortsfestes Bauteil, z. B. ein Maschinengestell, in welchem sich das zu messende Objekt bewegt.

Zur Befestigung der Messeinrichtung dient ein Federarm 32. Der Federarm 32 weist einen ersten Schenkel 34 und einen zweiten Schenkel 36 auf. Die Schenkel 34 und 36 sind jeweils als flache Federblätter ausgebildet, die in ihrer Ebene eine hohe Steifigkeit aufweisen und senkrecht zu ihrer Ebene elastisch federnd auslenkbar sind. Im dargestellten Ausführungsbeispiel ist der gesamte Federarm 32 mit seinen Schenkeln 34 und 36 als einstückiges Stanz-Biegeteil aus einem Federblech, insbesondere aus einem Federstahlblech hergestellt.

An dem einen Ende des Federarmes 32, d. h. an dem einen Ende des ersten Schenkels 34 ist einstückig aus dem Blech des Federarmes 32 ein Befestigungsband 38 ausgebildet. Das Befestigungsband 38 weist zwei Löcher 40 auf, die zum Anschrauben des Befestigungsbandes 38 an dem Bauteil dienen.

Von dem als Befestigungsband 38 ausgebildeten Ende des Federarmes 32 erstreckt sich der erste Schenkel 34 bei montierter Messeinrichtung in der Z-Richtung, d. h. in der Richtung, in welcher sich das an dem Messrad 20 anliegende zu messende Objekt bewegt. An dem von dem Befestigungsband 38 abgewandten freien Ende des ersten Schenkels 34 ist an dessen einer Seitenlängskante der zweite Schenkel 36 einstückig angesetzt und mit seiner Federblattebene rechtwinklig zur Federblattebene des ersten Schenkels 34 abgebogen. An seinem freien Ende weist der zweite Schenkel 36 eine kreisförmige Ausstanzung auf und ist als zu dieser Ausstanzung konzentrischer Kreisring ausgebildet. An diesem kreisringförmigen Bereich des zweiten Schenkels 36 ist das Gehäuse 12 des Drehgebers 10 mittels Schrauben 42 befestigt, wobei der Drehgeber 10 koaxial zu der kreisförmigen Ausstanzung angeordnet ist und der Deckel 18 des Gehäuses 12 durch die kreisförmige Ausstanzung hindurchgreift. Der zweite Schenkel 36 schließt mit seinem kreisringförmigen Bereich den Ringspalt zwischen dem Gehäuse 12 mit dem Deckel 18 und der stirnseitig offenen Lauffläche 22 des Messrades 20 ab, um das Innere des Messrades 20 mit dem Drehgeber 10 gegen die Umgebung zu schützen, die häufig mit Schmutz, Feuchtigkeit und dergleichen belastet ist.

Wie am besten in Figur 3 zu sehen ist, ist der zweite Schenkel 36 in seiner Federblattebene unter einem spitzen Winkel in Richtung auf das befestigbare Ende des Federarmes 32 geneigt. Der Drehgeber 10 mit dem koaxial umschließenden Messrad 20 ist auf der Seite des zweiten Schenkels 36 angeordnet, auf welcher sich der erste Schenkel 34 befindet. Durch diese Ausbildung ist der Drehgeber 10 mit dem Messrad 20 etwa mittig über dem ersten Schenkel 34 angeordnet, so dass kompakte Außenabmessungen der gesamten Messeinrichtung erhalten werden, die die Einbaumöglichkeiten für die Messeinrichtung begünstigen.

Das Kabel 26 für den Anschluss des Drehgebers 10 ist durch den Deckel 18 nach außen geführt und kann an einer von dem Befestigungsband 38 rechtwinklig hochgebogenen Klemmlasche 44 festgelegt werden.

Zur Montage der Messeinrichtung wird der Federarm 32 mit seinem Befestigungsband 38 an einem Bauteil, vorzugsweise einem ortsfesten Bauteil wie z. B. einem Maschinengestell befestigt. Dabei wird der Federarm 32 so montiert, dass der erste Schenkel 34 in der Z-Richtung verläuft, in welcher sich das zu messende Objekt in Bezug auf das feste Bauteil bewegt. Der erste Schenkel 34 ermöglicht eine elastisch federnde Auslenkung des Drehgebers 10 und des Messrades 20 in der Y-Richtung, die senkrecht zu der sich bewegenden Oberfläche des zu messenden Objektes verläuft, auf welcher das Messrad 20 mit seiner Lauffläche 22 aufsitzt. Die Federkraft des ersten Schenkels 34 in Y-Richtung bewirkt den Andruck des Messrades 20 gegen das zu messende Objekt, z. B. mit einer Andruckkraft von etwa 5N, wobei das Messrad durch Auslenkung des ersten Schenkels 34 in Y-Richtung Unebenheiten der Oberfläche des Objektes folgen kann. Der zweite Schenkel 36 erlaubt eine Auslenkung der Achse des Drehgebers 10 und des Messrades 20 in der zur Z-Richtung und Y-Richtung senkrechten X-Richtung, in welcher die Achse des Messrades 20 liegt. Die Auslenkung des zweiten Schenkels 36 in X-Richtung bewirkt eine Verschwenkung des zweiten Schenkels 36 um die Biegekante, an welcher der zweite Schenkel 36 an dem ersten Schenkel 34 ansetzt. Diese in Figur 1 durch den Pfeil A angedeutete Schwenkbewegung entspricht einer Pendelbewegung der Achse des Messrades 20 in der X-Y-Ebene. Durch diese federnde pendelnde Aufhängung des Messrades 20 kann sich dessen Lauffläche 22 an Neigungen der Oberfläche des zu messenden Objektes in X-Richtung, d. h. quer zur Laufrichtung des Objektes anpassen. Dadurch wird sichergestellt, dass die Lauffläche 22 stets mit ihren Laufringen 28 bzw. 30 kraftschlüssig an der Oberfläche des zu messenden Objektes anliegt.

In der Z-Richtung, in welcher sich das zu messende Objekt bewegt, ist sowohl der erste Schenkel 34 als auch der zweite Schenkel 36 des Federarmes 32 flächig ausgebildet und weist somit eine äußerst hohe Steifigkeit auf. Der Federarm 32 lässt somit keine Bewegung der Achse des Messrades 20 in Z-Richtung, d. h. in der Bewegungsrichtung des zu messenden Objektes zu, welche die Messgenauigkeit beeinträchtigen könnte.

### Bezugszeichenliste

- 10: Drehgeber
- 12: Gehäuse
- 14: Kugellager
- 16: Geberwelle
- 18: Deckel
- 20: Messrad
- 22: Lauffläche
- 24: Boden
- 26: Kabel
- 28: Gummiringe
- 30: Rändelung
- 32: Federarm
- 34: erster Schenkel
- 36: zweiter Schenkel
- 38: Befestigungsband
- 40: Löcher
- 42: Schrauben
- 44: Klemmlasche

## Patentansprüche

1. Messeinrichtung zur Messung des Weges und/oder der Geschwindigkeit eines bewegten Objektes in Bezug auf ein Bauteil, mit einem Messrad (20) und mit einem Drehgeber (10), wobei das Messrad (20) drehwinkelgenau mit der Geberwelle (16) des Drehgebers (10) gekoppelt ist, wobei das Messrad (20) mit einer durch seine Mantelfläche gebildeten Lauffläche (22) in der Weise auf das Objekt aufsetzbar ist, dass die Achse des Messrades in einer als X-Richtung bezeichneten Richtung im Wesentlichen senkrecht zur als Z-Richtung bezeichneten Bewegungsrichtung des Objektes verläuft, wobei das Messrad (20) und der Drehgeber (10) an dem Bauteil in einer zur X-Richtung und zur Z-Richtung im Wesentlichen senkrechten als Y-Richtungbezeichneten Richtung federnd gelagert ist, wozu das Messrad (20) und der Drehgeber (10) an einem zwei Schenkel (34, 36) aufweisenden Federarm (32) angeordnet sind, wobei der Federarm (32) mit dem Ende seines ersten Schenkels (34) an dem Bauteil befestigbar ist, wobei an dem Ende des zweiten Schenkels (36) das Messrad (20) und der Drehgeber (10) angebracht sind und wobei der erste Schenkel (34) im Wesentlichen in Y-Richtung und der zweite Schenkel (36) im Wesentlichen in X-Richtung federnd auslenkbar ist,
**dadurch gekennzeichnet, dass** die Schenkel (34, 36) des Federarmes (32) als Federblätter ausgebildet sind, dass das Federblatt des ersten Schenkels (34) im Wesentlichen in der X-Z-Ebene liegt und dass das Federblatt des zweiten Schenkels (36) im Wesentlichen rechtwinklig am freien Ende des Federblattes des ersten Schenkels (34) angesetzt ist und im Wesentlichen in der Y-Z-Ebene liegt.

2. Messeinrichtung nach Anspruch 1,
**dadurch gekennzeichnet, dass** der Federarm (32) ein einstückiges Stanz-Biegeteil aus einem Federblech, vorzugsweise einem Federstahlblech ist.

3. Messeinrichtung nach Anspruch 1 oder 2,
**dadurch gekennzeichnet, dass** an dem Ende des ersten Schenkels (34) ein Befestigungsband (38) zur Befestigung an dem Bauteil einstückig angeformt ist.

4. Messeinrichtung nach einem der vorhergehenden Ansprüche,
**dadurch gekennzeichnet, dass** das Messrad (20) als zylindrische Hohlwalze ausgebildet ist, die den Drehgeber (10) koaxial umschließt.

5. Messeinrichtung nach Anspruch 4,
**dadurch gekennzeichnet, dass** das Gehäuse (12) des Drehgebers (10) mit seiner einen Stirnseite an dem Federarm (32) befestigt ist und das Messrad (20) drehfest von der an der entgegengesetzten Stirnseite aus dem Gehäuse (12) ragenden Geberwelle (16) getragen wird.

6. Messeinrichtung nach Anspruch 4,
**dadurch gekennzeichnet, dass** die Lauffläche (22) des Messrades (20) zwei axial beabstandete Laufringe (28; 30) an ihrem Außenumfang aufweist.

## Claims

1. A measuring device for measuring the path and/or speed of a moving object in relation to a structural component, comprising a measuring wheel (20) and a rotary encoder (10),
wherein the measuring wheel (20) is coupled to the encoder shaft (16) of the rotary encoder (10) at a precise angle of rotation,
wherein the measuring wheel (20), with the bearing/contact surface (22) formed by its shell, can be positioned on the object in such a manner that the axis of the measuring wheel runs substantially in a direction referred to as the X direction [and] substantially perpendicular to the direction of motion of the object referred to as the Z direction, wherein the measuring wheel (20) and the rotary encoder (10) are spring-mounted on the component in a direction substantially perpendicular to the X direction and to the Z direction and referred to as the Y direction, for which purpose the measuring wheel (20) and the rotary encoder (10) are disposed on a spring arm (32) comprising two blades (34, 36),
wherein the spring arm (32) can be fastened by the end of its first blade (34) to the component,
wherein the measuring wheel (20) and the rotary encoder (10) are mounted on the end of the second blade (36), and wherein the first blade (34) can be deflected substantially in the Y direction and the second blade (36) can be deflected in substantially the X direction,
**characterised in that** the blades (34, 36) of the spring arm (32) are designed as spring leaves,
**in that** the spring leaf of the first blade (34) lies substantially in the X-Z plane
and **in that** the spring leaf of the second blade (36) is attached substantially at right angles to the free end of the spring leaf of the first blade (34) and lies substantially in the Y-Z plane.

2. A measuring device according to Claim 1,
**characterised in that** spring arm (32) is a single-piece elastic stamped part, preferably a spring steel sheet.

3. A measuring device according to Claim 1 or 2,
**characterised in that** a fastening strap (38) is moulded integrally on the end of the first blade (34) for attachment to the component.

4. A measuring device according to one of the preceding Claims,
**characterised in that** the measuring wheel (20) is designed as a cylindrical hollow cylinder that coaxially surrounds the rotary encoder (10)

5. A measuring device according to Claim 4,
**characterised in that** the housing (12) of the rotary encoder (10) is secured to the spring arm (32) by one of its sides, and the measuring wheel (20) is supported in torque-proof fashion by the encoder shaft (16) projecting out of the housing (12) on the opposite side.

6. A measuring device according to Claim 4,
**characterised in that** the bearing surface (22) of the measuring wheel (20) comprises two axially spaced races/ball races (28; 30) on its outer circumference.

## Revendications

1. Dispositif de mesure servant à mesurer le trajet et/ou la vitesse d'un objet mobile par rapport à un élément, comprenant une roue de mesure (20) et un capteur (10), sachant que la roue de mesure (20) est couplée avec l'arbre de capteur (16) du capteur de rotation (10) selon un angle de rotation précis, sachant que la roue de mesure (20) peut être placée sur l'objet par une surface de roulement (22) formée par son enveloppe de sorte que l'axe de la roue de mesure s'étende dans une direction X pour l'essentiel perpendiculaire à la direction de mouvement de l'objet appelée direction Z, la roue de mesure (20) et le capteur de rotation (10) sont logés élastiquement sur l'élément dans une direction Y essentiellement perpendiculaire à la direction X et la direction Z, sachant que la roue de mesure (20) et le capteur de rotation (10) sont disposés à cet effet sur un bras élastique (32) présentant deux branches (34, 36), sachant que le bras élastique (32) étant fixé par l'extrémité de sa première branche (34) à l'élément, l'extrémité de la deuxième branche (36) est munie de la roue de mesure (20) et du capteur de rotation (10), et sachant que la première branche (34) peut être déviée essentiellement dans la direction Y et la deuxième branche (36) essentiellement dans la direction X,
**caractérisé en ce que**
les branches (34, 36) du bras élastique (32) sont des lames à ressort, la lame à ressort de la première branche (34) est essentiellement dans le plan X-Z, et la lame à ressort de la deuxième branche (36) est aboutée essentiellement à angle droit à l'extrémité libre de la lame à ressort de la première branche (34) et se situe essentiellement dans le plan Y-Z.

2. Dispositif de mesure selon la revendication 1,
**caractérisé en ce que**
le bras élastique (32) est une pièce estampée/pliée d'un seul tenant à partir d'une tôle à ressorts, de préférence d'une tôle d'acier à ressorts.

3. Dispositif de mesure selon la revendication 1 ou 2,
**caractérisé en ce qu'**
un ruban de fixation (38) est rapporté d'un seul tenant à l'extrémité de la première branche (34) pour la fixation à l'élément.

4. Dispositif de mesure selon l'une quelconque des revendications précédentes,
**caractérisé en ce que**
la roue de mesure (20) est un cylindre creux qui entoure le capteur de rotation (10) coaxialement.

5. Dispositif de mesure selon la revendication 4,
**caractérisé en ce que**
le boîtier (12) du capteur de rotation (10) est fixé par l'un de ses cotés frontaux au bras élastique (32) et la roue de mesure (20) est portée solidaire en rotation par l'arbre de capteur (16) faisant saillie du boîtier (12) du côté frontal opposé.

6. Dispositif de mesure selon la revendication 4,
**caractérisé en ce que**
la surface de roulement (22) de la roue de mesure (20), présente à sa périphérie extérieure deux bagues de roulement (28; 30) écartées axialement.
